# EUROPEAN PATENT APPLICATION

(11) **EP 1 511 308 A1**
(43) Date of publication of application: **02.03.2005**
(21) Application number: 03292146.2
(22) Date of filing: 01.09.2003
(51) Int. Cl.: H04N 5/782, H04N 5/445

(54) **Video recording device**

(71) Applicant: Thomson Licensing S.A., 92648 Boulogne Cedex (FR)
(72) Inventor: Barron, Steven Anthony, 738243 Singapore (SG); Yuan, Li Fen, 760874 Singapore (SG)
(74) Representative: Thies, Stephan

(57) **Abstract**

The invention refers to a video recording device (1), having a timer comprising time input means (UI) for receiving a start time (STI). The timer further comprises means (uP) for computing an end time (ETC) based on the start time (STI), start time entering conditions (CMD1, CMD2, CMD3) and a predetermined duration (PD).

## Description

The invention refers to a video recording device, especially to a disk recording device like hard disk recorder or optical disk recorder.

An inventive method for programming a timer, especially for such video recording device, comprises the steps of receiving an input start time and calculating an end time from said input start time and a predetermined duration as starting values. Depending on further input command, times or other timer parameters are changed or confirmed. This has the advantage that the user does not need to enter an end time but a most likely suitable end time is proposed by the timer. The predetermined duration is selected such that it usually covers the program to be recorded. The further input command may be a confirmation of the proposal or a navigation command for entering other parameters or changing time parameters. If no command is received after a certain predetermined time is elapsed, this is taken as a confirmation of the timer programming.

Preferably, a further input command is detected to belong to a second or a third type of commands. A second type command is a command that indicates that the user wants to set the end time manually or at least does not wish the current end time to be changed automatically. In case such second type command is received, no more calculation of the end time is performed. A third type command is a command that indicates that a new calculation of the end time is to be performed. For example, if the input time was changed, a new calculation of end time is performed. These features have the advantage, that the end time is automatically updated where necessary, but that no automatic update occurs in situations where the user most likely will not agree to modifications.

According to the invention, the predetermined duration is changed dependent on whether the user selects a "single event" timer or a "repeated event" timer. This has the advantage to provide the user with an acceptable end time in even more cases, as usually a "single event" timer refers to recording of longer duration, as a movie, while a "repeated event" timer usually refers to several short recordings like soap opera, drama, variety show and the like.

Preferably, the invention provides for setting the predetermined duration, e.g. during a set-up run, to a value most suitable for the user. A country dependent setting requires the user to enter the country where the device is used in and selects the predetermined duration according to a table of countries. This has the advantage that the predetermined duration is set to 60 minutes for countries where sitcoms usually take up to 60 minutes, and to other durations in countries having a different time scheme. Also preferably used is a channel dependent setting. This has the advantage to adapt the predetermined duration to the special time scheme of special channels, like a news channel having a 15 minutes time scheme or a movie channel having a 90 minutes time scheme. The channel dependent predetermined duration may also be dependent, in addition, to the day time or to the day of the week. Some channels have an hourly time scheme in the morning and the afternoon while a different time scheme is used in late afternoon and evening. For example a 45 minutes block followed by a 60 minutes block followed by two 30 minutes blocks followed by a 90 minute block may occur. Preferably, other channels change the time scheme between working days and weekend days. In case that the user prefers a different, unique time scheme, a user selected predetermined duration is provided for.

Preferably, the end time calculation is performed only if there is no other end time indication available. Such end time indication may be derived from an electronic program guide or a video programming system like VPS. Here, too, the user can set his preference regarding program guide derived end time or calculated end time.

The time of an electronic device preferably comprises input means for receiving a start time and further inputs, and means for computing an end time based on the start time, a predetermined duration and start time entering conditions. Start time entering conditions may be the selection of predetermined durations made in a set-up as described above or single event/multiple event timing conditions and the like. A video recorder equipped with such timer provides the user a very comfortable timer programming with a very low number of figures to key in.

Further advantages can be taken from the description of preferred embodiments. Of course, different combinations of features than those described are also in the scope of the invention. The figures show:
- Fig. 1: schematics of an inventive device,
- Fig. 2: inventive timer programming method,
- Fig. 3: detail of the timer programming method,
- Fig. 4: set-up recording timer programming,
- Fig. 5a-5x: different displays during timer programming.

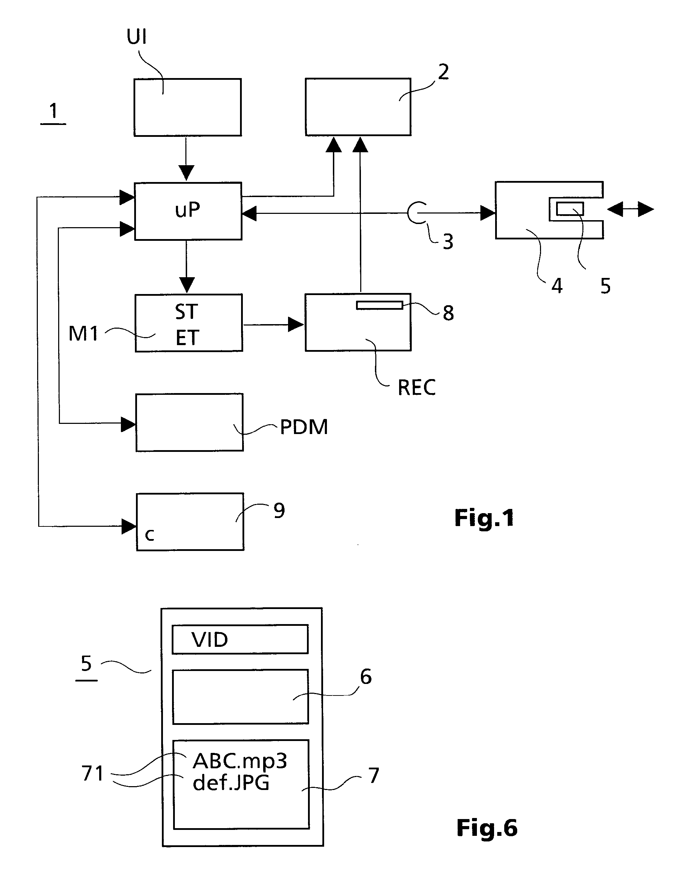

Fig. 1 shows a schematic view of an inventive video recording device 1. A recording and playback section REC outputs a playback signal to a display 2. The display 2 is also provided for displaying a timer menu as provided by a microprocessor uP. The microprocessor uP receives commands from a user interface UI and transfers start time ST and end time ET to a memory M1. In dependency on the times ST ET set in memory M1 the recording and playback section REC starts and ends recording if timer mode is selected. The microprocessor is also connected to a predetermined duration memory PDM for receiving a predetermined duration PD and for calculating an end time ETC therefrom and from an input start time STI. A disk as recording medium 8 is shown inserted into recording and playback section REC. It may be a removable disk as DVD or a hard disk. The device 1 is also provided with a further memory 9. The device 1 has also a link 3 through which an external removable media device 4 for removable media 5 is connectable to and disconnectable from the device 1.

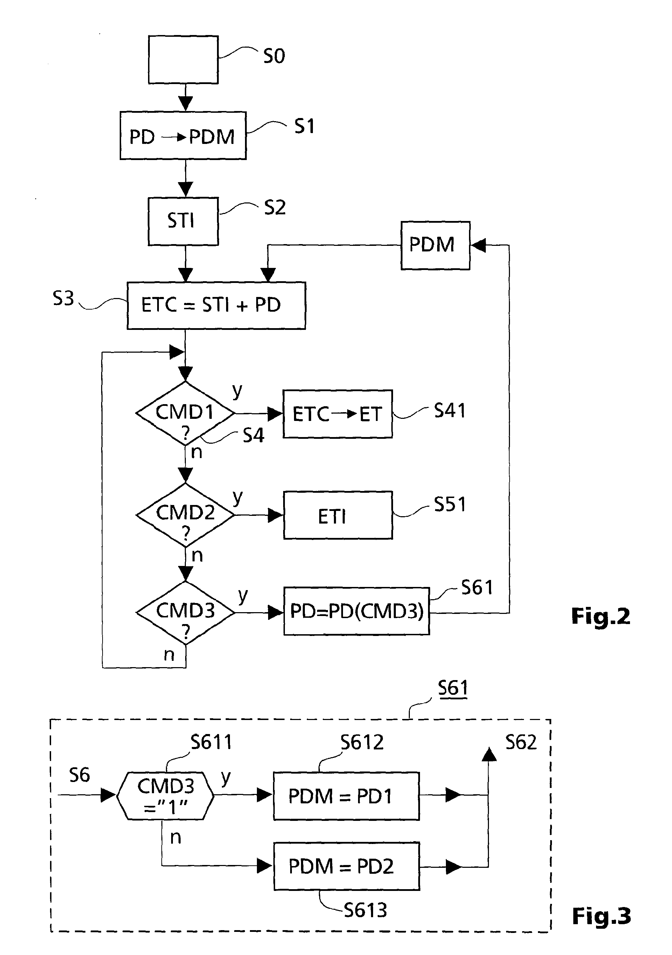

Fig. 2 shows an example of an inventive timer programming method. After the start in step S0 a standard predetermined duration PD is set in a predetermined duration memory PDM in step S1. In step S2 an input start time STI is received. In step S3 a calculated end time ETC is computed as ETC=STI+PD. In step S4 it is checked whether an end type command CMD1 is received. In this case the calculated end time ETC is taken as end time ET in step S41 and the timer programming is ended. Otherwise, it is checked in step S5 whether a second type command CMD2 is received. If such command is received, in step S51 the timer programming is continued without further calculating an end time ETC. When the timer program is finished after step S51, the end time ET is taken as an input end time ETI or, if such is not present, the last calculated end time ETC is taken. If the condition of step S5 is not fulfilled, it is checked in step S6 whether a third type command CMD3 is received. If this is the case, the predetermined time PD is updated in step S61 in accordance with the command CMD3 and entered in step S62 in the predetermined duration memory PDM. If the result of step 56 is negative, i.e. if no command or a command irrelevant for the selection is received, it is returned to step S4. Preferably, a function to leave the routine after a certain time without command is implemented but not shown here.

Fig. 3 shows a detail of the timer programming method regarding the updating step S61. In step S611 it is checked whether the third type command indicates a single event recording. If this is the case, the predetermined duration memory PDM is updated with a first predetermined duration value PD1 in step S612. If in step S611 a repeated event recording is detected, the predetermined duration memory PDM is updated in step S613 with a different duration, the second predetermined duration PD2.

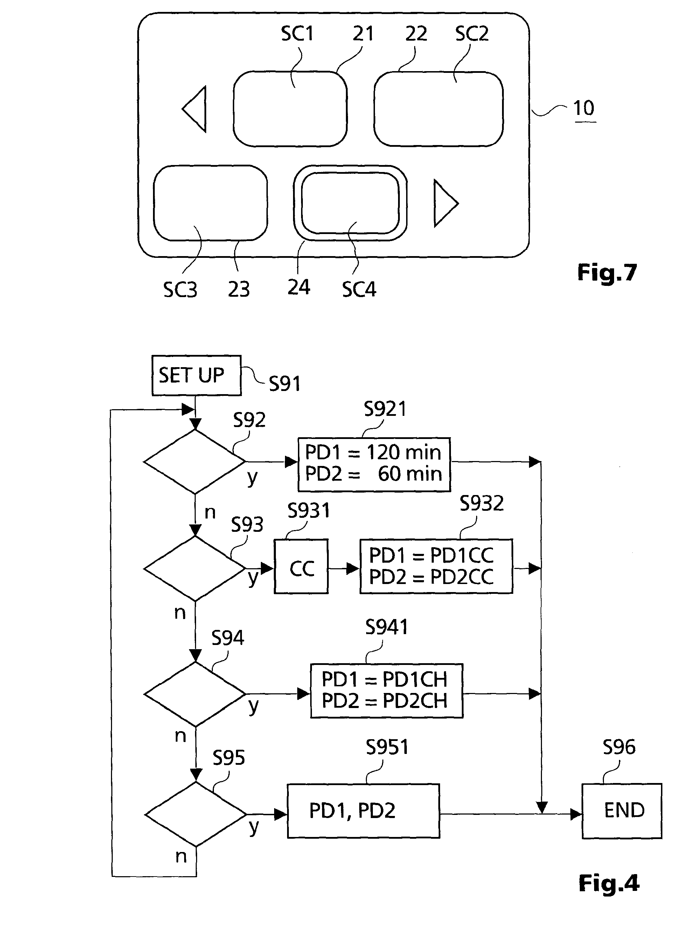

Fig. 4 shows a set-up procedure regarding timer programming. After set-up is started in step S91 the user's request is detected. In step S92 it is checked whether standard conditions are requested. In this case the first predetermined duration PD1 is set to 120 minutes and the second predetermined duration PD2 is set to 60 minutes in step S921. If in step S93 it is detected that country dependent determination is selected, the country information is determined in step S931. This might be by direct user input or by checking an already existing country information. Following, in step S932 first and second predetermined duration PD1, PD2 are set to country dependent values PD1CC, PD2CC. Preferably, a table indicating appropriate values for each country CC is available. In step S94 it is checked whether channel dependent determination is selected. In this case predetermined durations PD1 and PD2 are set to channel dependent values PD1CH, PD2CH in step S941. The latter are preferably taken from a respective table. In step S95 it is checked whether the user wants to determine the durations himself and the predetermined durations PD1, PD2 are received in step S951 from the user. In step S96 the predetermined durations PD1, PD2 are stored to the predetermined duration memory PDM.

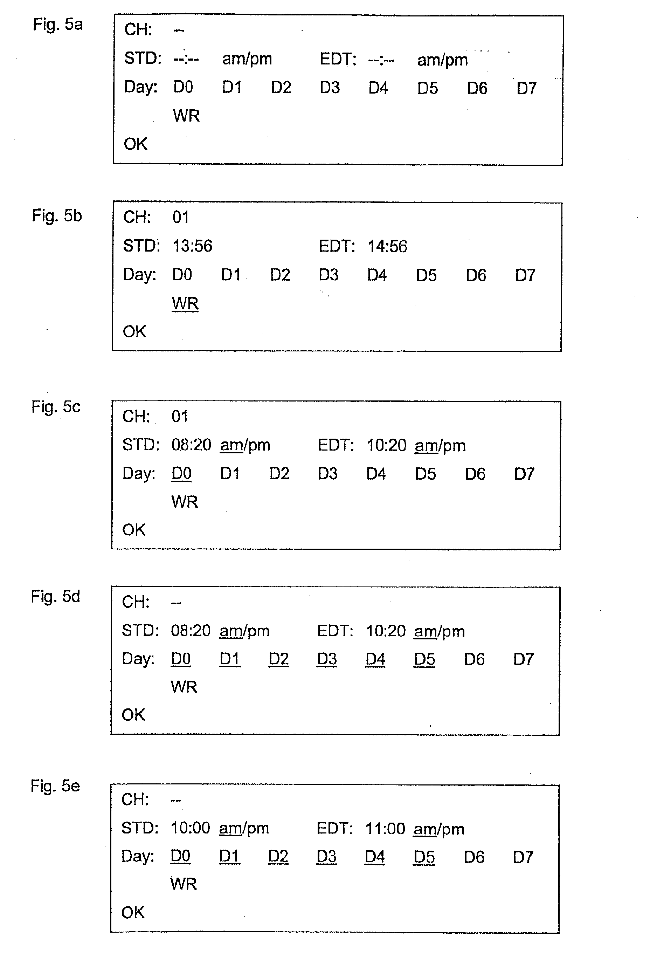

Figures 5a to 5e show different displays during timer programming. The selected channel is indicated by CH, start time and end time are displayed as STD and ETD, the day of the timer programming is indicated by D0 to D7, wherein D0 is today, D1 is the following day, D2 the second following day and so on. A weekly repeat is indicated by WR. A confirmation command is indicated by an ok button OK. For countries where the am/pm time standard is used, such indications are given. A timer recording that shall be repeated from the next day until the 4^{th} next day, the day indicators D1, D2, D3 D4 are to be selected by the user.

It is now described to increase the stop time automatically to be some fixed duration later than the start time when setting up a timer.
Usually it occurs the problem that when the user is setting up a new timer or is modifying an existing timer in Timer Setup Screen, all possible entries CH, STD, ETD must be entered, otherwise an error message will appear. According to the described embodiment by default the stop time ETD is set to one hour later than the start time STD with the input start time STI being the start time. If no start time STI is input, the current time is taken as start time STI. With this new proposal, the user is provided with a more convenient way to setup a timer with the duration PD the same as the fixed one by entering the start time only, such as 1 hour. It works this way: when user has entered the start time completely, i.e. all four digits of STD the end time ETD is updated automatically by advancing it one hour from the start time, since most of the time the user would setup timers with one hour duration. So user need not to enter an end time ETI if that is the record duration he wants. He can also change the end time ETD by entering another four digits.

The duration is pre-set in the system, of course it will be set to values other than the one hour if it is more desirable, e.g. based on some program duration statistics. The regular programs as drama or variety show are commonly one hour or half an hour long at least in US and Singapore.

When a new timer is set up, the Timer Setup Screen, as shown in Fig. 5b, is perforated with default values. The current channel, here channel 01 is used, the Current System Time, e.g. 13:56, is used for the default Start Time STD, and Current Time plus one hour as the default Stop Time ETD, here 14:56. And with the method according to the invention the device provides some additional functions, which bring some convenience while setting up new timers. It is about to set the End Time ETC a pre-fixed amount of time the predetermined duration PD later than the actual Start Time STD automatically after the user completes the four digits entry of Start Time STI, so that the user needs not set the End Time ET if the automatically set End Time ETC suits his needs. Of course it is still possible to set a preferred end time, ET, thus overriding the calculated end time. Dependent on the timer frequency, the pre-fixed amount of time PD is 120 minutes for ONCE timers, as this event is most likely to be a movie, and 60 minutes for timers with other frequencies, as this duration is suitable for sitcoms, variety shows and the like. In order not to be too smart, this is only applicable to the new timers, not to the modified timers. Further, normally the End Time is set automatically only once. That means as long as the user does not navigate from STD to other buttons, but only highlights on Start Time Button STD and enters complete Start Time STI repeatedly or toggles the am/pm repeatedly, if available, the End Time ETD would update automatically according to the Start Time STD and the Frequency.

Here are some examples for the application of the inventive method. Fig. 5c-e show a first example:
By default, the Frequency is ONCE, i.e. single event recording. Hence when the user opens up a new timer, the default End Time ETD would be PD=120 minutes later than the Start Time STD. Here, the current time is 08:20, thus STD=08:20 and ETD=10:20. The channel is channel 01.
Now the user moves down to the Day Button, and changes the Frequency from D0 (single day) to D0-D5 i.e. Mon-Fri if the current day is Monday, see Fig. 5d. No change on Start time STD or Stop time ETD is done at this stage. Now the user enters 10:00 as Start Time, and the Stop Time updates to 11:00 automatically, as PD2=60 minutes is used for repeated event, see Fig. 5e. Without leaving the Start Time Button, the user now toggles am to pm, the Stop Time updates to 11:00 pm also (not shown), as the start time field has not been left. Further, without leaving the Start Time Button, the user changes the Start Time to 02:00am, and the stop time automatically updates to 03:00am.

If now the user navigates away from the Start Time Button, maybe to change the frequency and comes back to set the Start Time STD, or goes to the Stop Time ETD and changes the Stop Time ETD and comes back to set the Start Time STD. Under both conditions, the end time ETD is not updated automatically again as the described navigation commands belong to a second type of commands that indicates that no further automatic update is desired. But user can enter their preferred ones.

Fig. 5c-f show a second example: By default, the Frequency is ONCE, i.e. single event recording. Hence when the user opens up a new timer, the default End Time ETD would be PD=120 minutes later than the Start Time STD. Here, the current time is 08:20, thus STD=08:20 and ETD=10:20. The channel is channel 01. Now the user moves down to the Day Button, and changes the Frequency from D0 (single day) to D0-D5 i.e. Mon-Fri, see Fig. 5d. No change on Start time STD or Stop time ETD is done at this stage. Now the user enters 10:00 as Start Time, and the Stop Time updates to 11:00 automatically, as PD2=60 minutes is used for repeated event, see Fig. 5e. Now the user navigates away from the Start Time Button, and if he comes back to the Start Time Button again, the End Time does not update automatically but stays as in Fig. 5e, as the navigation command is taken as an indication that no further update is desired.

Fig. 6 shows in diagrammatic form the content of a removable medium 5. A first memory area contains the volume identification VID, a second memory area contains the file structure 6 and a third memory area is the data area 7 where several files 71 are stored.

Fig. 7 shows a menu 10 for a recording medium 8 which menu is displayed on display 2. Certain menu areas 21, 22, 23, 24 are provided to show an indication of different scenes SC1, SC2, SC3, SC4. In the figure one scene SC4 has been highlighted by double rim to indicate that this is the scene the user has navigated to.

## Claims

1. Method for programming a timer having the steps of
- receiving an input start time (STI),
- calculating an end time (ETC) by taking into account said input time (STI) and a predetermined duration (PD) as starting values,
- receiving a further input command (CMD1, CMD2, CMD3)
- taking said calculated end time (ETC) as end time (ET) if said further input command (CMD1, CMD2, CMD3) is an end type command.

2. Method according to claim 1 comprising at least one of the steps
- no more performing calculation of end time (ETC) if said further input command (CMD2) belongs to a second type command (CMD2).
- returning to the calculating step using starting values (STI, PD1, PD2) updated in accordance with said further input command (CMD2) if said further input command (CMD3) belongs to a third type command (CMD3).

3. Timer of an electronic device (1) comprising
- time input means (UI) for receiving a start time (STI)
- means (uP) for computing an end time (ETC) based on the start time (STI), start time entering conditions (CMD1, CMD2, CMD3) and a predetermined duration (PD).

4. Method according to claim 1 or 2 or timer according to claim 3, wherein said predetermined duration (PD) is a first duration (PD1) in case an input command "single event recording" is set, and a second duration (PD2) in case an input command "repeated event recording" is set.

5. Method or timer according to claim 4, wherein said first and second duration (PD1, PD2) are one of country dependent predetermined duration (PD1CC, PD2CC), and channel dependent predetermined duration (PD1CH, PD2CH), and user selected predetermined duration, and day time or week day dependent predetermined duration.

6. Video recorder with a timer according to one of claims 1, 4 or 5 or being provided for performing the method according to one of claims 2 to 5.
